# NEUE EUROPÄISCHE PATENTSCHRIFT

(11) **EP 1 269 274 B2**
(45) Veröffentlichungstag und Bekanntmachung des Hinweises auf die Entscheidung über den Einspruch: **23.11.2011**
(45) Hinweis auf die Patenterteilung: 24.09.2003
(21) Anmeldenummer: 01923698.3
(22) Anmeldetag: 24.03.2001
(51) Int. Cl.: G05B 9/03

(54) **SICHERHEITSSCHALTGERÄT UND VERFAHREN ZUR EINSTELLUNG EINES BETRIEBSMODUS EINES SICHERHEITSSCHALTGERÄTS**
SAFETY SWITCHING UNIT AND METHOD FOR SETTING AN OPERATIONAL MODE OF A SAFETY SWITCHING UNIT
INTERRUPTEUR DE SECURITE ET PROCEDE POUR AJUSTER UN MODE DE FONCTIONNEMENT POUR INTERRUPTEUR DE SECURITE

(30) Priorität: 04.04.2000 DE 10016712
(43) Veröffentlichungstag der Anmeldung: 02.01.2003
(73) Patentinhaber: Pilz GmbH & Co.., 73760 Ostfildern (DE)
(72) Erfinder: PULLMANN, Jürgen, 73061 Ebersbach (DE)
(74) Vertreter: Duhme, Torsten
(86) Internationale Anmeldenummer: PCT/EP2001/003381
(87) Internationale Veröffentlichungsnummer: WO 2001/075532

(56) Entgegenhaltungen:
- EP-A- 0 428 338
- DE-A- 19 707 241
- DE-A2- 19 805 722
- US-A- 4 473 876
- 'MSM Muting-Erweiterungsmodul für MSL: Technische Beschreibung', 06 März 1996, SICK OPTIK ELEKTRONIK
- 'Modulares Sicherheits-Interface MSI-mx/Rx MSI-mx/Tx: Anschluss- und Betriebsanleitung', Juli 1999, LEUZE LUMIFLEX, MÜNCHEN

## Beschreibung

Die vorliegende Erfindung betrifft ein Sicherheitsschaltgerät zum Ein- und sicheren Ausschalten eines elektrischen Verbrauchers abhängig von einem Schaltereignis eines Sicherheitsgebers, mit zumindest einem Schaltelement und einer Betriebsmodus-Einstelleinrichtung zur Auswahl eines Betriebsmodus abhängig von einem definierten Eingangssignal.

Die Erfindung betrifft ferner ein Verfahren zur Einstellung eines Betriebsmodus eines solchen Sicherheitsschaltgeräts.

Ein solches Sicherheitsschaltgerät und ein entsprechendes Verfahren sind aus der DE 197 07 241 A1 bekannt.

Sicherheitsschaltgeräte der vorgenannten Art sind allgemein bekannt. So bietet die Anmelderin beispielsweise Sicherheitsschaltgeräte in unterschiedlichen Varianten unter dem Namen "PNOZ" an. Derartige Sicherheitsschaltgeräte werden vor allem im industriellen Bereich verwendet, um elektrisch angetriebene Maschinen, wie beispielsweise eine Presse oder ein Fräswerkzeug, ein- und sicher auszuschalten. Sie dienen insbesondere in Verbindung mit einem mechanisch betätigbaren Sicherheitsgeber, beispielsweise einem Not-Aus-Taster, dazu, die Maschine in einer Notfallsituation schnell und sicher abzuschalten. Hierzu wird die Stromversorgung der abzuschaltenden Maschine über Arbeitskontakte von zwei elektromechanischen Schaltelementen geführt. Sobald auch nur eines der beiden Schaltelemente seine Arbeitskontakte öffnet, wird die Stromzuführung der Maschine unterbrochen.

Dem Sicherheitsschaltgerät kommt somit die Aufgabe zu, das von dem Sicherheitsgeber erzeugte Schaltereignis sicher auszuwerten und davon abhängig elektronische bzw. elektromechanische Schaltelemente zu betätigen, die die Stromversorgung der Maschine dann abschalten.

Aufgrund ihrer Verwendung in sicherheitskritischen Bereichen benötigen die hier betroffenen Sicherheitsschaltgeräte in vielen Ländern eine gesonderte Betriebszulassung durch zuständige Aufsichtsbehörden. Dazu muß die Eigenfehlersicherheit der Geräte anhand vorhandener Normen, wie beispielsweise der europäischen Norm EN 954-1, nachgewiesen werden. Dies beeinträchtigt die Gestaltungsfreiheit bei der Konstruktion und Entwicklung von Sicherheitsschaltgeräten im Vergleich zu "normalen" Schaltgeräten erheblich. Infolgedessen werden unter dem Begriff "Sicherheitsschaltgerät" hier nur solche Geräte verstanden, die eine einschlägige Betriebszulassung besitzen oder bei Fehlen einer solchen Zulassung zumindest die Anforderungen der Sicherheitskategorie 3 der zuvor genannten Norm erfüllen.

Neben dem erwähnten Not-Aus-Schalter werden eine Vielzahl von anderen Sicherheitsgebern eingesetzt, beispielsweise Schutztürschalter, Lichtschutzzäune etc. Aufgrund der unterschiedlichen Anforderungen und Ausrichtungen dieser Sicherheitsgeber ist es erforderlich, das Sicherheitsschaltgerät hinsichtlich seines Betriebsmodus an den eingesetzten Sicherheitsgeber-Typ anzupassen.

Dabei bezieht sich der Begriff "Betriebsmodus" in diesem Zusammenhang sowohl auf die Einstellung von bestimmten Funktionsarten des Gerätes, beispielsweise ob stationäre oder getaktete Ausgangssignale erzeugt werden, als auch auf die Einstellung bestimmter Betriebsparameter, beispielsweise von unterschiedlich langen Verzögerungszeiten beim Abschalten.

Eine Möglichkeit zur Anpassung der Geräte an unterschiedliche Erfordernisse bestand einfach darin, für jeden Typ von Sicherheitsgeber ein eigenes Sicherheitsschaltgerät vorzusehen. Die Folge ist jedoch eine erhöhte Lagerhaltung und Probleme bei der Reparatur, weil nur das jeweils an den entsprechenden Typ des Sicherheitsgebers angepaßte Sicherheitsschaltgerät eingesetzt werden kann.

Um hier Abhilfe zu schaffen, hat die Anmelderin in der eingangs genannten DE 197 07 241 A1 ein Sicherheitsschaltgerät vorgeschlagen, an das unterschiedliche Sicherheitsgeber eines Satzes von möglichen anschließbaren Sicherheitsgebern angeschaltet werden können. Dabei ist für jeden Sicherheitsgeber des Satzes eine typische Kombination von verwendeten Ein- und Ausgängen vorgesehen. Die Art der Anschaltung des Sicherheitsgebers ist für jeden Sicherheitsgeber innerhalb des Satzes eindeutig, womit das Sicherheitsschaltgerät beim Anlauf aufgrund der geschlossenen galvanischen Verbindungen erkennen kann, welche Art von Sicherheitsgeber angeschlossen ist bzw. welche Funktion bei gleichen Sicherheitsgebern erforderlich ist. Entsprechend dieser Zuordnung steuert sich das Sicherheitsschaltgerät selbsttätig in den erforderlichen Betriebsmodus. Mit anderen Worten bedeutet das, daß das Sicherheitsschaltgerät eine Vielzahl von Eingängen aufweist, und der Benutzer die Möglichkeit besitzt, durch gezieltes Verbinden des Sicherheitsgebers mit einem dieser Eingänge einen von mehreren Betriebsmodi auszuwählen. In einem Ausführungsbeispiel offenbart DE 197 07 241 A1 ein Sicherheitsschaltgerät mit einer Vielzahl von Ausgängen und lediglich einem Eingang. Auch in diesem Fall kann das Sicherheitsschaltgerät beim Anlauf aufgrund der geschlossenen galvanischen Verbindung zwischen den Ausgängen und dem einen Eingang erkennen, welche Art von Sicherheitsgeber angeschlossen ist bzw. welche Funktion erforderlich ist.

Obgleich sich dieses Sicherheitsschaltgerät in der Praxis bewährt hat, bleibt der Wunsch bestehen, ein Sicherheitsschaltgerät gleicher Flexibilität zu schaffen, das jedoch konstruktiv einfacher ausfällt. Insbesondere soll das Sicherheitsschaltgerät bei gleicher Flexibilität kostengünstiger herstellbar sein.

Aus einer Betriebsanleitung der Firma Leuze lumiflex ist ein Sicherheitsschaltgerät unter der Typenbezeichnung MSI-mx bekannt, bei dem verschiedene Betriebsarten mit Hilfe von DIP-Schaltern ausgewählt werden können. In einigen Fällen hängt die ausgewählte Betriebsart zusätzlich davon ab, wie die Eingangsklemmen "Reset" und "Schützkontrolle" beschaltet sind.

Vor diesem Hintergrund besteht die Aufgabe der Erfindung darin, das eingangs erwähnte Sicherheitsschaltgerät so auszugestalten, daß mit konstruktiv einfachen Mitteln mehrere Betriebsmodi einstellbar sind.

Zur Lösung dieser Aufgabe werden ein Sicherheitsschaltgerät nach Anspruch 1 und ein Verfahren nach Anspruch 14 vorgeschlagen.

Der Vorteil dieses Sicherheitsschaltgeräts liegt insbesondere in seinem einfachen Aufbau. So ist es ausreichend, einen einzigen Eingang zur Zuführung des Eingangssignals vorzusehen. Dies läßt einerseits die Verringerung der Baugröße des Sicherheitsschaltgeräts zu und führt andererseits zu Kosteneinsparungen.

Ein weiterer wesentlicher Vorteil liegt darin, daß auf aufwendige und zur Erzielung der geforderten Sicherheit redundant ausgeführte Schaltelemente zur Einstellung der verschiedenen Betriebsmodi verzichtet werden kann.

In einer Ausgestaltung der Erfindung beinhaltet das Sicherheitsschaltgerät interne Signalerzeugungsmittel, die die zumindest drei unterschiedlichen definierten Eingangssignale an zumindest einem Ausgang bereitstellen.

Diese Maßnahme besitzt den Vorteil, daß die zumindest drei unterschiedlichen definierten Eingangssignale ohne weiteren Aufwand stets zur Verfügung stehen. Die Verwendung des Sicherheitsschaltgeräts ist daher ohne zusätzliche weitere Hilfsmittel möglich. Darüber hinaus ist ein besonderer Vorteil, daß beim Austausch eines defekten, alten Sicherheitsschaltgeräts das neue Sicherheitsschaltgerät allein durch die Übernahme der vorherigen Klemmenbelegung in den richtigen Betriebsmodus versetzt wird. Dies ist sehr einfach und komfortabel, und es vermeidet zudem sicherheitskritische Fehler beim Austausch eines defekten Gerätes. Außerdem kann ein Austausch eines defekten Gerätes hierdurch schneller durchgeführt werden als bei herkömmlichen Einstellelementen.

In einer weiteren Ausgestaltung der Erfindung umfaßt die Betriebsmodus-Einstelleinrichtung ein Vergleichsmittel zum Vergleich des Eingangssignals mit zumindest drei verschiedenen Vergleichssignalen.

Diese Maßnahme führt zu einem einfachen Aufbau und läßt es insbesondere zu, bereits im Sicherheitsschaltgerät vorhandene Signale, beispielsweise Betriebsspannungssignal, 0-Volt-Signal etc., als Vergleichssignale einzusetzen.

In einer weiteren Ausgestaltung der Erfindung ist ein Takterzeugungsmittel vorgesehen, das ein Taktsignal erzeugt und dieses als eines der Vergleichssignale bereitstellt. Vorzugsweise erzeugt das Takterzeugungsmittel zwei unterschiedliche Taktsignale und stellt diese als zwei der zumindest drei verschiedenen Vergleichssignale bereit.

Diese Maßnahmen machen es möglich, als Eingangssignal nicht nur ein Signal mit konstanter Spannung, also beispielsweise Betriebsspannung oder 0 Volt, zuzuführen, sondern das Eingangssignal zu takten. Dies führt zu dem Vorteil, daß das Eingangssignal unterschiedliche Zustände annehmen kann und damit auch eine Erkennung unterschiedlicher Betriebsmodi (mehr als zwei) erlaubt. In baulicher Hinsicht ist es besonders vorteilhaft, vier unterschiedliche Eingangssignale einzusetzen, nämlich ein Signal mit Betriebsspannung, mit 0 Volt, mit einem ersten Takt oder mit einem zweiten Takt. Da die Sicherheitsschaltgeräte zur Erkennung von Querschlüssen in Verbindungsleitungen zwischen Sicherheitsgeber und Sicherheitsschaltgerät bereits Takterzeugungsmittel für zwei unterschiedliche Taktsignale umfassen, ist zur Bereitstellung der Vergleichssignale deshalb kein zusätzlicher Aufwand erforderlich. Es ist aber durchaus denkbar, das Takterzeugungsmittel zu erweitern, so daß mehr als die genannten zwei Taktsignale erzeugt werden und damit eine Auswahl von mehr als vier Betriebsmodi ermöglicht wird.

In einer weiteren Ausgestaltung der Erfindung ist zumindest eine Ausgang vorgesehen, der mit dem Takterzeugungsmittel verbunden ist und eines der Taktsignale bereitstellt.

Diese Maßnahme hat den Vorteil, daß ein im Sicherheitsschaltgerät bereits für die Querschlußerkennung erzeugtes Taktsignal für die Einstellung der Betriebsmodi nutzbar wird. Damit erübrigen sich zusätzliche bauliche Maßnahmen, um entsprechende Eingangssignale für die Betriebsmodus-Einstelleinrichtung zu erzeugen.

In einer weiteren Ausgestaltung der Erfindung ist eine Steuereinrichtung vorhanden, die mit der Betriebsmodus-Einstelleinrichtung verbunden ist und abhängig von zumindest einem Ausgangssignal der Betriebsmodus-Einstelleinrichtung den ausgewählten Betriebsmodus einstellt. Vorzugsweise ist die Betriebsmodus-Einstelleinrichtung Teil der Steuereinrichtung.

Weiter bevorzugt ist es, daß die Steuereinrichtung ein Eingangssignal für ein nachgeordnetes Sicherheitsschaltgerät erzeugt und an einem Ausgang bereitstellt. Dieses Eingangssignal kann ein Taktsignal des Takterzeugungsmittels, ein konstantes Signal mit einem ersten Spannungspegel, vorzugsweise Masse, oder ein konstantes Signal mit einem zweiten Spannungspegel, vorzugsweise Betriebsspannung, sein.

Diese Maßnahmen haben den Vorteil, daß es möglich wird, daß das Steuerschaltgerät den Betriebsmodus des nachgeordneten, in Reihe geschalteten Sicherheitsschaltgeräts einstellt. Somit kann das nachgeordnete Sicherheitsschaltgerät an die Art des Ausgangssignals, beispielsweise ein Taktsignal oder ein konstantes Signal, des vorgeordneten Sicherheitsschaltgeräts angepaßt werden.

In einer weiteren Ausgestaltung der Erfindung ist ein Eingang zum Anlegen eines Startsignals vorgesehen, um eine von mehreren Start-Betriebsmodi auszuwählen. Dabei sind beispielsweise mögliche Start-Betriebsmodi "Automatischer Start", "Manueller Start" oder "Manueller überwachter Start".

Diese Maßnahme ermöglicht eine weitere Erhöhung der Flexibilität des Sicherheitsschaltgeräts, da über die Auswahl des über den Startschalter zugeführten Startsignals der gewünschte Start-Betriebsmodus ausgewählt werden kann. So kann das Startsignal, wie bei dem zuvor erläuterten Eingangssignal zur Auswahl des Betriebsmodus, ein Taktsignal oder ein konstantes Signal sein.

In einer weiteren Ausgestaltung der Erfindung ist ein Auswahlmittel vorgesehen, dem das Eingangssignal und das Startsignal zugeführt sind und das abhängig von einem Steuersignal eines der beiden Signale der Betriebsmodus-Einstelleinrichtung zuführt.

Mit anderen Worten heißt das, daß die zuvor erläuterte Betriebsmodus-Einstelleinrichtung auch für die Einstellung des Start-Betriebsmodus genutzt werden kann, wobei die Steuereinrichtung ein entsprechendes Steuersignal an das Auswahlmittel schickt, um das Startsignal oder das Eingangssignal auszuwählen. Der Vorteil dieser Maßnahme liegt insbesondere in einer Vereinfachung des Aufbaus und damit in Kostenersparnissen.

Weitere Vorteile und Ausgestaltungen der Erfindung ergeben sich aus der Beschreibung und der beiliegenden Zeichnung.

Es versteht sich, daß die vorstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Die Erfindung wird nun anhand von Ausführungsbeispielen mit Bezug auf die Zeichnung näher erläutert. Dabei zeigen:
- Fig. 1: ein schematisches Blockdiagramm eines erfindungsgemäßen Sicherheitsschaltgeräts; und
- Fig. 2: ein schematisches Blockdiagramm eines Kanals des in Fig. 1 gezeigten Sicherheitsschaltgeräts.

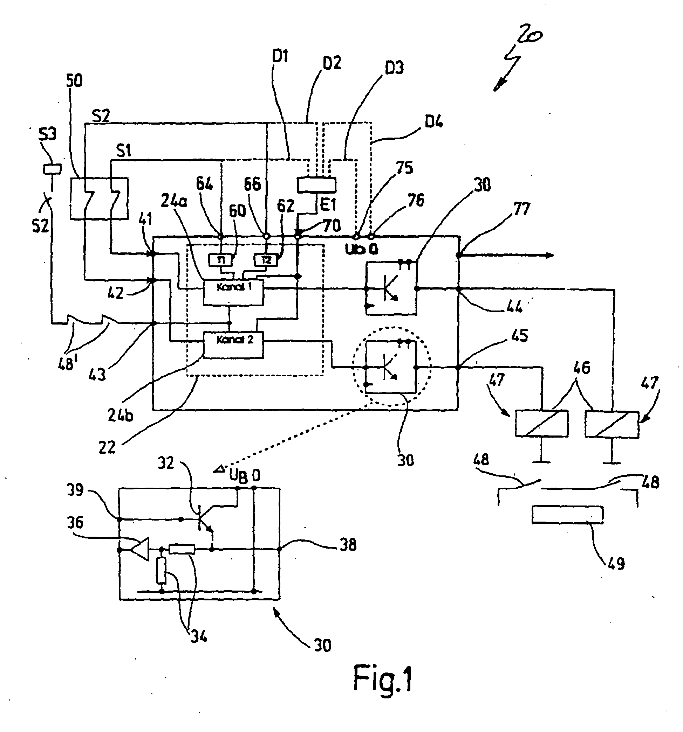

In Fig. 1 ist in schematischer Darstellung ein Sicherheitsschaltgerät gezeigt und mit dem Bezugszeichen 20 gekennzeichnet. Das Sicherheitsschaltgerät 20 umfaßt eine schematisch angedeutete sichere Auswerte- und Steuereinheit 22. Diese Auswerte- und Steuereinheit ist aus bekannten Bauelementen aufgebaut, wie sie auch in dem vorgenannten Sicherheitsschaltgerät "PNOZ" der Anmelderin verwendet werden. Die Aufgabe dieser Auswerteund Steuereinheit besteht insbesondere darin, zugeführte Schaltsignale sicher auszuwerten und entsprechende Ausgangssignale zu erzeugen.

Die Auswerte- und Steuereinheit 22 ist im gezeigten Ausführungsbeispiel zweikanalig aufgebaut, wobei die beiden Kanäle mit den Bezugszeichen 24a und 24b gekennzeichnet sind. Selbstverständlich sind auch andere Ausgestaltungen der Auswerte- und Steuereinheit 22 möglich. Zur näheren Erläuterung einer solchen Auswerte- und Steuereinheit 22 wird beispielsweise auf das Buch "Maschinensicherheit", Winfried Gräf, Hüthig Verlag, 1997, Bezug genommen.

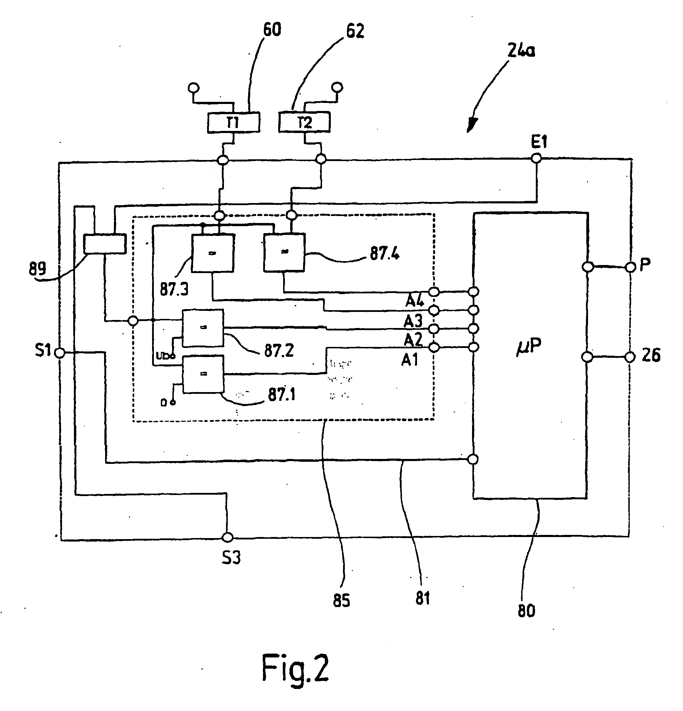

Das Sicherheitsschaltgerät 20 umfaßt ferner Schaltelemente 30, die von der Auswerte- und Steuereinheit 22 Steuersignale erhalten. Dies ist in Fig. 2 durch Leitungen 26 verdeutlicht.

Bei dem Schaltelement 30 handelt es sich im einfachsten Fall um einen Transistor, dessen Basis das Steuersignal empfängt und an dessen Emitter oder Kollektor ein Ausgangssignal abgegriffen wird, wobei das Ausgangssignal von dem Schaltelement auf zwei unterschiedliche Potentiale schaltbar ist.

Im vorliegenden Ausführungsbeispiel umfaßt das Schaltelement 30 neben einem Transistor 32 zwei in Reihe geschaltete Widerstände 34 und einen Verstärker 36. Der Kollektor des Transistors 32 liegt an einem ersten Bezugspotential UB, während der Emitter des Transistors 32 über die Reihenschaltung der Widerstände 34 an einem zweiten Potential 0 (Masse) liegt. Der Verstärker 36 ist mit seiner Eingangsseite mit dem Knoten der beiden Widerstände 34 verbunden und stellt an seinem Ausgang 37 ein Rückkoppellesesignal zur Verfügung.

Das Ausgangssignal des Schaltelements 30 wird am Emitter des Transistors 32 abgenommen und steht an einem Ausgang 38 zur Verfügung. Ferner gelangt das Ausgangssignal der Auswerte- und Steuereinheit 22 über einen Eingang 39 des Schaltelements 30 an die Basis des Transistors 32.

Das Schaltelement 30 ist so aufgebaut, daß abhängig von dem Signal am Eingang 39 das am Ausgang 38 des Schaltelements anliegende Signal zwischen dem ersten Potential und dem zweiten Potential geschaltet wird. Im vorliegenden Ausführungsbeispiel liegt am Ausgang 38 das erste Potential UB an, wenn das Eingangssignal am Eingang 39 in etwa dieses Potential hat. Wenn das Ausgangssignal nahe am zweiten Potential liegt, ist auch das Ausgangssignal am Ausgang 38 auf dem zweiten Potential 0.

Das Schaltelement 30 ist aus Übersichtlichkeitsgründen in Fig. 1 stark vereinfacht dargestellt. Es versteht sich jedoch, daß die Schaltelemente 30 entsprechend dem gerade beschriebenen Aufbau ausgebildet sind. Es gibt jedoch auch andere Ausgestaltungsmöglichkeiten, um die beschriebene Funktion des Schaltelements 30 zu erreichen.

Das in Fig. 1 gezeigte Sicherheitsschaltgerät 20 umfaßt zwei Eingangsklemmen 41, 42, die mit der Auswerte- und Steuereinheit 22 verbunden sind. An diese beiden Eingangsklemmen 41, 42 wird - im vorliegenden Ausführungsbeispiel - ein zweikanaliger Schalter 50 angeschlossen, derart, daß die Eingangsklemme 41 bei geschlossenem Schalter mit einem Signal S1 und die Eingangsklemme 42 mit einem Signal S2 beaufschlagt sind. Bei dem Schalter 50 handelt es sich hier beispielsweise um einen Not-Aus-Schalter einer Maschine. Selbstverständlich kann es sich bei dem Schalter 50 auch um einen Schalter einer Schutztürüberwachung handeln.

Je nach gewünschter Sicherheitskategorie sind die Signale S1 und S2 Signale mit konstantem Potential, beispielsweise Betriebsspannung oder 0 Volt, oder mit Taktsignale verbunden, um Querschlüsse zwischen den beiden Leitungen zu den Eingangsklemmen 41, 42 feststellen zu können.

Das Sicherheitsschaltgerät 20 umfaßt neben den erwähnten Eingangsklemmen auch Ausgangsklemmen 44, 45, wobei jeweils eine Ausgangsklemme 44, 45 mit dem Ausgang 38 eines Schaltelements 30 verbunden ist. Somit ist jeder Ausgangsklemme 44, 45 ein Schaltelement 30 zugeordnet, wobei das Ausgangssignal des Schaltelements 30 über die entsprechende Ausgangsklemme 44, 45 von außen abgreifbar ist.

An die Ausgangsklemme 44 ist ein Eingangskreis 46 eines Relais 47 oder eines Schützes oder allgemein ein Aktor oder ein weiteres Sicherheitsschaltgerät angeschlossen. In gleicher Weise ist an der Ausgangsklemme 45 ein Eingangskreis 46 eines weiteren Relais oder Schützes 47 oder allgemein ein weiterer Aktor oder ein weiteres Sicherheitsschaltgerät angeschlossen. Jeweilige Arbeitskontakte 48 der beiden Relais 47 liegen in Reihe und dienen zum Schließen oder Öffnen einer Energieversorgungsleitung zu einer schematisch angedeuteten Maschine 49. Die Maschine 49 läuft im vorliegenden Ausführungsbeispiel nur dann, wenn beide Arbeitskontakte geschlossen sind, d.h., wenn an beiden Ausgangsklemmen 44, 45 ein zur Aktivierung der Eingangskreise 46 ausreichendes Signal anliegt.

Das Sicherheitsschaltgerät 20 weist eine weitere Eingangsklemme 43 auf, der ein Startsignal zuführbar ist. Dieses Startsignal wird von einem Startschalter 52 erzeugt, indem eine Verbindung zu einer Signalquelle S3 geschaffen wird. Diese Signalquelle S3 liefert beispielsweise ein konstantes Signal (Betriebsspannung, 0 Volt) oder ein Taktsignal. In Reihe zu dem Startschalter 52 liegen zwei weitere Arbeitskontakte 48' des Relais 47, die mit den Arbeitskontakten 48 zwangsgeführt sind und im Gegensatz zu diesen als Öffner ausgebildet sind. Damit wird erreicht, daß die Eingangsklemme 43 auf jeden Fall dann von der Signalquelle S3 getrennt wird, wenn zumindest einer der beiden Arbeitskontakte 48 geschlossen ist.

Die grundsätzliche Funktion eines solchen Sicherheitsschaltgeräts 20 ist an sich bekannt, so daß nur kurz darauf eingegangen werden soll.

Das Sicherheitsschaltgerät 20 hat die Aufgabe, die Arbeitskontakte 48 zu schließen, wenn ein Startsignal an der Eingangsklemme 43 anliegt. Die Maschine 49 läuft daraufhin an. Wenn bei Eintreten eines Notfalls der Not-Aus-Schalter 50 gedrückt wird, wertet die Auswerte- und Steuereinheit dieses Schaltereignis aus und steuert die Schaltelemente 30 entsprechend an. Die Ausgangssignale werden auf das zweite Potential (Masse) gebracht, so daß die Bestromung der beiden Eingangskreise 46 der Relais 47 unterbrochen wird, mit dem Ergebnis, daß die beiden Arbeitskontakte 48 öffnen und die Maschine zum Stillstand kommt. Die Auswerte- und Steuereinheit 22 arbeitet dabei sicher im Sinne europäischer Sicherheitsnormen, so daß beispielsweise verschweißte Arbeitskontakte 48 des Relais 47 oder beispielsweise ein Querschluß zwischen den beiden Eingangsklemmen 41, 42 erkannt werden. Ferner läßt sich über das am Ausgang 37 anliegende Rückkoppellesesignal ein Fehler des Schaltelements 30 erkennen.

Weitere Erläuterungen zu diesem Sicherheitsschaltgerät 20 sowie zu Abwandlungen davon und der Möglichkeit, derartige Sicherheitsschaltgeräte in unterschiedlicher Art und Weise zu koppeln, beispielsweise in Reihe zu schalten, sind in der Anmeldung der Anmelderin DE 100 11 211.0, angemeldet am 8. März 2000, offenbart. Zur Vereinfachung werden die dort beschriebenen Ausführungsbeispiele durch Bezugnahme hier aufgenommen.

In Fig. 1 ist zu erkennen, daß die Auswerte- und Steuereinheit 22 einen ersten Taktgeber 60 und einen zweiten Taktgeber 62 umfaßt. Die Taktgeber 60, 62 erzeugen jeweils ein Taktsignal, wobei sich die beiden Taktsignale in ihrer Taktperiode und/oder der Phase unterscheiden. Das jeweils erzeugte Taktsignal wird einerseits den Kanälen 24a, 24b zugeführt (hier nur für Kanal 24a dargestellt) und andererseits an Ausgangsklemmen 64, 66 bereitgestellt. An diesen beiden Ausgangsklemmen 64, 66 lassen sich die zuvor angegebenen Signale S1, S2 abgreifen und über den Schalter 50 den beiden Eingangsklemmen 41, 42 zuführen. Bei geschlossenem Schalter 50 werden die Signale S1 und S2 von dem jeweiligen Kanal 24a, 24b ausgewertet, indem beispielsweise die Signale jeweils mit dem vom Taktgeber 60 bzw. 62 erzeugten Taktsignal verglichen werden. Falls der Vergleich zu einer Nichtübereinstimmung führt, ist der Schalter 50 entweder geöffnet, oder es liegt ein Querschluß zwischen den Leitungen vor, wobei in beiden Fällen das Ergebnis ein Abschalten der Maschine 49 sein wird.

Das in Fig. 1 gezeigte Sicherheitsschaltgerät 20 umfaßt eine weitere Eingangsklemme, die mit dem Bezugszeichen 70 gekennzeichnet ist. Diese Eingangsklemme 70 ist mit der Auswerte- und Steuereinheit 22 und dort sowohl mit dem Kanal 24a als auch mit dem Kanal 24b verbunden. Die Eingangsklemme 70 dient der Zuführung eines Eingangssignals E1, das festlegt, in welchem Betriebsmodus das Sicherheitsschaltgerät 20 arbeiten soll. Zur Vereinfachung wird nachfolgend bei der Beschreibung der Funktion dieses Signals lediglich auf den Kanal 24a Bezug genommen.

Es versteht sich, daß genau die gleiche Funktion auch von Kanal 24b ausgeführt wird, um einen zweikanaligen Aufbau zu erreichen, d.h. also, daß eine Einstellung des Betriebsmodus beider Kanäle über das Eingangssignal erfolgt.

In Fig. 1 ist durch gestrichelte Linien angegeben, woher das Signal E1 stammt. Eine Möglichkeit besteht darin, die Eingangsklemme 70 mit der Ausgangsklemme 64 über eine Drahtbrücke D1 zu verbinden, so daß das Signal E1 von dem Taktgeber 60 geliefert wird. Die zweite Möglichkeit besteht darin, die Eingangsklemme 70 über eine Drahtbrücke D2 mit der Ausgangsklemme 66 zu verbinden, so daß der zweite Taktgeber 62 das Signal E1 liefert. Die dritte Möglichkeit ist eine Drahtbrücke D3 zwischen Eingangsklemme 70 und beispielsweise einer Klemme 75, an der die Betriebsspannung anliegt. Die vierte in Fig. 1 gestrichelt angedeutete Lösung besteht in einer Drahtbrücke D4 zwischen einer Klemme 76, an der 0 Volt anliegt, und der entsprechenden Eingangsklemme 70. Diese Lösung ließe sich beispielsweise auch dadurch realisieren, daß an die Eingangsklemme 70 kein Signal angelegt wird.

Auf diese Art und Weise ist es also möglich, durch eine einfache Drahtbrücke eines von vier im Sicherheitsschaltgerät 20 bereits vorgesehenen Signalen der Eingangsklemme 70 und damit dem Kanal 24a und dem Kanal 24b der Auswerte- und Steuereinheit 22 zuzuführen. Folglich lassen sich auch vier unterschiedliche Betriebsmodi über ein einziges Eingangssignal E1 auswählen.

Zuvor wurde erwähnt, daß über die Eingangsklemme 43 ein Startsignal S3 dem Sicherheitsschaltgerät 20 zugeführt werden kann. Wie bei dem Eingangssignal E1, läßt sich dieses Startsignal S3 von den Ausgangsklemmen 64, 66, oder 75 abgreifen (aufgrund interner Verschaltung kann ein 0V Signal nicht erkannt werden), so daß insgesamt drei unterschiedliche Startsignale möglich sind, ohne das Sicherheitsschaltgerät 20 um weitere Signalerzeugungsmittel ergänzen zu müssen. Vielmehr werden die bereits vorhandenen Mittel für zusätzliche Funktionen eingesetzt.

Fig. 2 zeigt in schematischer Darstellung ein Blockschaltbild des in Fig. 1 gezeigten Kanals 24a stellvertretend für beide Kanäle 24a und 24b. Dieser Kanal 24a umfaßt eine Steuereinrichtung 80, die im wesentlichen die sichere Auswertung des über die Eingangsklemme 41 zugeführten Signals S1 übernimmt. Dieses Signal S1 wird über eine elektrische Verbindung 81 übertragen. Abhängig von diesem Signal S1 wird am Ausgang 26 der Steuereinrichtung 80 ein das nachgeordnete Schaltelement 30 ansteuerndes Signal erzeugt.

Zur Auswertung des Eingangssignals E1 ist eine Vergleichseinrichtung 85 vorgesehen, der die Aufgabe zukommt, den Typ des Eingangssignals zu bestimmen, d.h. anzugeben, welcher der möglichen - im vorliegenden Ausführungsbeispiel vier - Eingangssignal-Typen angelegt ist. Eine Möglichkeit, diese Aufgabe auszuführen, besteht darin, das Eingangssignal E1 mit jedem der möglichen Signaltypen, also mit den Taktsignalen der beiden Taktgeber 60, 62, mit der Betriebsspannung UB oder der Spannung 0 zu vergleichen. Hierfür sind vier Vergleicher 87.1, 87.2, 87.3 und 87.4 vorgesehen. Jedem dieser Vergleicher 87 wird einerseits das Signal E1 und andererseits eines der vorgenannten Signale zugeführt. So ist beispielsweise ein Eingang des Vergleichers 87.4 mit dem Taktgeber 62, ein Eingang des Vergleichers 87.3 mit dem anderen Taktgeber 60 oder ein Eingang des Vergleichers 87.2 mit der Betriebsspannung UB verbunden. Die vier Vergleicher 87.1 bis 87.4 liefern insgesamt vier Ausgangssignale A1 bis A4, die zur weiteren Auswertung der Steuereinrichtung 80 zugeführt werden. Anhand dieser Ausgangssignale A1 bis A4 kann die Steuereinrichtung entscheiden, welche der vier möglichen Betriebsmodi gewünscht ist, und kann diese dann auch entsprechend einstellen. Die vier Ausgangssignale A1 bis A4 können auch zu einem 2-Bit-Signal zusammengefaßt werden, so daß lediglich zwei Signale an die Steuereinrichtung 80 übermittelt werden müssen. Ferner ist es auch denkbar, die Funktionalität der Vergleichseinrichtung 85 von der Steuereinrichtung 80 übernehmen zu lassen. Dies ist durch entsprechende Ausgestaltung dieser Steuereinrichtung 80, vorzugsweise eines Mikrocontrollers, möglich.

Zur Erhöhung der Flexibilität und zur Reduzierung des baulichen Aufwands ist es möglich, die Vergleichseinrichtung 85 auch dazu einzusetzen, den Typ des Eingangssignals S3 zu bestimmen. Um nur eines der beiden Signale E1 oder S3 der Vergleichseinrichtung 85 zuzuführen, ist ein Umschalter 89 schematisch angedeutet, der über ein Steuersignal der Steuereinrichtung 80 (in Fig. 2 nicht gezeigt) umschaltbar ist. Somit lassen sich auch die drei unterschiedlichen Start-Betriebsmodi über die entsprechende Auswahl des Signals S3 einstellen.

Wie eingangs bereits angedeutet, besteht beispielsweise ein Betriebsmodus darin, an den Eingangsklemmen 41 und 42 Taktsignale zuzulassen, so daß ein Querschluß zwischen den beiden zuführenden Leitungen erkennbar ist. Ein anderer Betriebsmodus besteht darin, das Schaltelement 30 von dem jeweiligen Kanal 24a, 24b so ansteuern zu lassen, daß an den Ausgangsklemmen 44, 45 ein Taktsignal anliegt. Dies ist dann vorteilhaft, wenn ein in Fig. 1 gezeigtes Sicherheitsschaltgerät 20 mit einem weiteren Sicherheitsschaltgerät 20 in Reihe geschaltet werden soll. Eine genaue Beschreibung einer solchen Reihenschaltung ist in der Patentanmeldung DE 100 11 211.0 der Anmelderin angegeben, so daß der Einfachheit wegen auf diese entsprechende Beschreibung Bezug genommen wird.

Ein weiter Betriebsmodus ist dann einzustellen, wenn das Sicherheitsschaltgerät 20 sowohl von einem vorgelagerten Sicherheitsschaltgerät Taktsignale zugeführt bekommt und an ein nachgeordnetes Sicherheitsschaltgerät auch Taktsignale liefern muß. Ein vierter Betriebsmodus ist dann auszuwählen, wenn das Sicherheitsschaltgerät 20 von einem vorgelagerten Sicherheitsschaltgerät 20 Taktsignale empfängt, aber an den Ausgangsklemmen 44, 45 ein konstantes Signal, also kein Taktsignal, bereitstellen muß. Dies wären vier mögliche Betriebsmodi, die durch Verbinden der Eingangsklemme 70 mit der Ausgangsklemme 64, der Ausgangsklemme 66, der Ausgangsklemme 75 oder der Ausgangsklemme 76 (oder alternativ Weglassen der Verbindung) eingestellt werden könnten.

Darüber hinaus sind aber auch andere Betriebsmodi denkbar. Bevorzugt ist, daß das Eingangssignal E1 nicht alleine für diesen Zweck erzeugt werden muß, sondern vielmehr bereits im Sicherheitsschaltgerät 20 vorhanden ist und nur über eine einfache Drahtbrücke an die Ausgangsklemme 70 geführt werden muß. Eine Sicherheit gegen Kurzschluß etc. wird vorteilhafterweise dadurch erreicht, daß die über die Drahtbrücken D1 bis D4 zu verbindenden Klemmen nicht unmittelbar nebeneinander am Sicherheitsschaltgerät 20 liegen.

Die Auswertung des Signals E1 erfolgt üblicherweise erst, nachdem geprüft wurde, ob Verdrahtungsfehler im Zusammenhang mit dem Schalter 50 vorliegen, was beispielsweise über die unterschiedlichen Taktsignale erreicht wird. Liegt kein Verdrahtungsfehler vor, liest die Steuereinrichtung 80 das Ergebnis des von der Vergleichseinrichtung 85 gelieferten Vergleichs aus und stellt daraufhin den gewünschten Betriebsmodus ein.

Fig. 2 läßt noch erkennen, daß die Steuereinrichtung 80 ein weiteres Ausgangssignal P liefert, das an einer in Fig. 1 zu erkennenden Ausgangsklemme 77 anliegt. Dieses Signal P kann bei einer Reihenschaltung von mehreren Sicherheitsschaltgeräten beispielsweise das Eingangssignal E1 für ein nachgeordnetes Sicherheitsschaltgerät bilden, so daß an diesem Sicherheitsschaltgerät keine Drahtbrücken zur Verbindung der Klemme 70 mit einer der Klemmen 64, 66, 75 oder 76 notwendig werden. Damit ist es möglich, daß die Steuereinrichtung 80 die Betriebsmodi des nachgeordneten Sicherheitsschaltgeräts 20 festlegt.

In einem weiteren, hier nicht näher dargestellten Ausführungsbeispiel wird über das Eingangssignal E1 ein Betriebsparameter, beispielsweise eine Verzögerungszeit beim Abschalten, eingestellt. In einem bevorzugten Anwendungsfall eines solchen Ausführungsbeispiels sind zwei funktionsgleiche Eingangsklemmen 70 vorhanden, so daß dem Sicherheitsschaltgerät hier zwei Eingangssignale E1 zugeführt werden können. Jedes der beiden Eingangssignale E1 kann entweder 24 Volt, O Volt, ein erstes oder ein zweites Taktsignal sein. Insgesamt lassen sich daher bei diesem Ausführungsbeispiel 16 verschiedene Verzögerungszeiten auswählen, ohne daß hierzu ein aufwendiger und teurer Mehrstellungsschalter benötigt wird. Bevorzugt sind die verschiedenen Verzögerungszeiten den beiden Eingangssignalen so zugeordnet, daß bei Anliegen der beiden 0 Volt Signale die kürzestmögliche Verzögerungszeit ausgewählt ist. Dies bedeutet, daß die kürzeste und damit im Hinblick auf Notfallsituationen sicherste Verzögerungszeit auch dann ausgewählt ist, wenn die Eingangssignale E1 infolge eines Fehlers fehlen oder wegfallen. Bei einem notwendigen Austausch des Gerätes ist diese Ausführung besonders schnell, da keine Einstellelemente für die Verzögerungszeit betätigt werden müssen.

## Patentansprüche

1. Sicherheitsschaltgerät zum Ein- und sicheren Ausschalten eines elektrischen Verbrauchers abhängig von einem Schaltereignis eines Sicherheitsgebers (50), mit Eingangsklemmen (41, 42) zum Anschließen des Sicherheitsgebers (50), mit zumindest einem Schaltelement (30) und mit einer Betriebsmodus-Einstelleinrichtung (85) zur Auswahl eines Betriebsmodus abhängig von einem definierten Eingangssignal (E1), wobei ein Eingang mit einer weiteren Eingangsklemme (70) vorhanden ist, der mit der Betriebsmodus-Einstelleinrichtung (85) verbunden ist, so daß der Betriebsmodus-Einstelleinrichtung (85) das Eingangssignal (E1) zuführbar ist, wobei die Betriebsmodus-Einstelleinrichtung (85) derart ausgebildet ist, daß sie das definierte Eingangssignal (E1) als eines von zumindest drei unterschiedlichen definierten Eingangssignalen erkennt, die an der einen weiteren Eingangsklemme (70) zuführbar sind, und in Abhängigkeit davon einen von zumindest drei definierten Betriebsmodi auswählt, wobei die Auswahl des Betriebsmodus die Einstellung von bestimmten Funktionsarten und/oder die Einstellung bestimmter Betriebsparameter des Sicherheitsschaltgerätes bewirkt, und wobei die zumindest drei unterschiedlichen definierten Eingangssignale zumindest ein Taktsignal von einem Takterzeugungsmittel (60, 62) und zumindest ein Signal (75, 76) mit konstanter Spannung beinhalten.

2. Sicherheitsschaltgerät nach Anspruch 1, **dadurch gekennzeichnet, daß** es interne Signalerzeugungsmittel (60, 62) beinhaltet, die die zumindest drei unterschiedlichen definierten Eingangssignale (E1) an zumindest einem Ausgang (64, 66, 75, 76) bereitstellen.

3. Sicherheitsschaltgerät nach Anspruch 1 oder 2, **dadurch gekennzeichnet, daß** die Betriebsmodus-Einstelleinrichtung (85) ein Vergleichsmittel (87) zum Vergleich des Eingangssignals (E1) mit zumindest drei verschiedenen Vergleichssignalen umfaßt.

4. Sicherheitsschaltgerät nach Anspruch 3, **gekennzeichnet durch** ein Takterzeugungsmittel (60, 62), das ein Taktsignal erzeugt und dieses als eines der Vergleichssignale bereitstellt.

5. Sicherheitsschaltgerät nach Anspruch 4, **dadurch gekennzeichnet, daß** das Takterzeugungsmittel (60, 62) zwei unterschiedliche Taktsignale erzeugt und diese als zwei der zumindest drei verschiedenen Vergleichssignale bereitstellt.

6. Sicherheitsschaltgerät nach Anspruch 4 oder 5, **dadurch gekennzeichnet, daß** zumindest ein Ausgang (64, 66) vorgesehen ist, der mit dem Takterzeugungsmittel (60, 62) verbunden ist und ein Taktsignal bereitstellt.

7. Sicherheitsschaltgerät nach einem der vorhergehenden Ansprüche, **dadurch gekennzeichnet, daß** das Eingangssignal (E1) ein Taktsignal des Takterzeugungsmittels (60, 62), ein konstantes Signal mit einem ersten Spannungspegel, vorzugsweise Masse, oder ein konstantes Signal mit einem zweiten Spannungspegel, vorzugsweise Betriebsspannung, ist.

8. Sicherheitsschaltgerät nach einem der vorhergehenden Ansprüche, **dadurch gekennzeichnet, daß** eine Steuereinrichtung (80) vorhanden ist, die mit der Betriebsmodus-Einstelleinrichtung (85) verbunden ist und abhängig von zumindest einem Ausgangssignal (A1-A4) der Betriebsmodus-Einstelleinrichtung (85) den ausgewählten Betriebsmodus einstellt.

9. Sicherheitsschaltgerät nach Anspruch 8, **dadurch gekennzeichnet, daß** die Steuereinrichtung (80) ein Eingangssignal (P) für ein nachgeordnetes Sicherheitsschaltgerät (20) erzeugt und an einem Ausgang (77) bereitstellt.

10. Sicherheitsschaltgerät nach Anspruch 9, **dadurch gekennzeichnet, daß** das Eingangssignal für das nachgeordnete Sicherheitsschaltgerät (P) ein Taktsignal des Takterzeugungsmittels, ein konstantes Signal mit einem ersten Spannungspegel, vorzugsweise Masse, oder ein konstantes Signal mit einem zweiten Spannungspegel, vorzugsweise Betriebsspannung, ist.

11. Sicherheitsschaltgerät nach einem der vorhergehenden Ansprüche, **dadurch gekennzeichnet, daß** ein Eingang (43) zum Anlegen eines Startsignals (S3) vorgesehen ist, um einen von mehreren Start-Betriebsmodi auszuwählen.

12. Sicherheitsschaltgerät nach Anspruch 11, **dadurch gekennzeichnet, daß** ein Auswahlmittel (89) vorgesehen ist, dem das Eingangssignal (E1) und das Startsignal (S3) zugeführt sind und das abhängig von einem Steuersignal eines der beiden Signale der Betriebsmodus-Einstelleinrichtung (85) zuführt.

13. Sicherheitsschaltgerät nach einem der Ansprüche 8 bis 12, **dadurch gekennzeichnet, daß** die Steuereinrichtung (80) die Betriebsmodus-Einstelleinrichtung (85) umfaßt.

14. Verfahren zur Einstellung eines Betriebsmodus eines Sicherheitsschaltgeräts (20) nach einem der Ansprüche 1 bis 13, wobei ein Sicherheitsgeber (50) an Eingangsklemmen (41, 42) angeschlossen wird, und wobei dem Sicherheitsschaltgerät (20) ein definiertes Eingangssignal (E1) zugeführt wird, wobei das definierte Eingangssignal (E1) über einen Eingang mit einer weiteren Klemme (70) einer Betriebsmodus-Einstelleinrichtung (85) zugeführt wird, wobei die Betriebsmodus-Einstelleinrichtung (85) das definierte Eingangssignal (E1) als eines von zumindest drei unterschiedlichen definierten Eingangssignalen erkennt und in Abhängigkeit davon einen von zumindest drei definierten Betriebsmodi auswählt, **dadurch gekennzeichnet, daß** die Auswahl des Betriebsmodus die Einstellung von bestimmten Funktionsarten und/oder die Einstellung bestimmter Betriebsparameter des Sicherheitsschaltgerätes bewirkt, und wobei die zumindest drei unterschiedlichen definierten Eingangssignale zumindest ein Taktsignal von einem Takterzeugungsmittel (60, 62) und zumindest ein Signal (75, 76) mit konstanter Spannung beinhalten.

15. Verfahren nach Anspruch 14, **dadurch gekennzeichnet, daß** die zumindest drei unterschiedlichen definierten Eingangssignale (E1) an zumindest einem Ausgang (64, 66, 75, 76) des Sicherheitsschaltgeräts (20) bereitgestellt werden.

## Claims

1. Safety switching device for connecting and reliably disconnecting an electrical load in response to a switching event of a safety transmitter (50), having input terminals (41, 42) for connecting the safety transmitter (50), having at least one switching element (30) and having an operating mode selector unit (85) for selecting an operating mode in response to a defined input signal (E1), wherein an input including a further input terminal (70) is provided, which input is connected to the operating mode selector unit (85) so that the input signal (E1) can be supplied to the operating mode selector unit (85), with the operating mode selector unit (85) being designed such that it identifies the defined input signal (E1) as one of at least three different defined input signals which can be supplied at said further input terminal (70), and, in response thereto, selects one of at least three defined operating modes, wherein the selection of the operating modes causes specific types of operation and/or specific operating parameters to be set, and wherein the at least three different input signals comprise at least one clock signal from a clock generator means (60, 62) and at least one signal (75, 76) having a constant voltage.

2. Safety switching device according to claim 1, **characterized in that** said safety switching device comprises internal signal generating means (60, 62), which provide the at least three different defined input signals (E1) at at least one output (64, 66, 75, 76).

3. Safety switching device according to claim 1 or 2, **characterized in that** the operating mode selector unit (85) comprises a comparator means (87) for comparing the input signal (E1) with at least three different reference signals.

4. Safety switching device according to claim 3, **characterized by** a clock generating means (60, 62), which generates a clock signal and provides this as one of the reference signals.

5. Safety switching device according to claim 4, **characterized in that** the clock generating means (60, 62) generates two different clock signals, and provides these as two of the at least three different reference signals.

6. Safety switching device according to claim 4 or 5, **characterized in that** at least one output (64, 66) is provided, which is connected to the clock generating means (60, 62) and provides a clock Signal.

7. Safety switching device according to any of the preceding claims, **characterized in that** the input signal (E1) is a clock signal from the clock generating means (60, 62), a constant signal at a first voltage level, preferably ground, or a constant signal at a second voltage level, preferably an operating voltage.

8. Safety switching device according to any of the preceding claims, **characterized in that** a control device (80) is provided, which is connected to the operating mode selector unit (85) and which selects, responsive to at least one output signal (A1-A4) from the operating mode selector unit (85), the desired operating mode.

9. Safety switching device according to claim 8, **characterized in that** the control device (80) generates an input signal (P) for a downstream safety switching device (20), and provides this at an output (77).

10. Safety switching device according to claim 9, **characterized in that** the input signal for the downstream safety switching device (P) is a clock signal from the clock generating means, a constant signal at a first voltage level, preferably ground, or a constant signal at a second voltage level, preferable an operating voltage.

11. Safety switching device according to any of the preceding claims, **characterized in that** an input (43) for supplying a start signal (S3) is provided, in order to select one of a number of start operating modes.

12. Safety switching device according to claim 11, **characterized in that** a selector means (89) is provided, to which the input signal (E1) and the start signal (S3) are supplied and which supplies one of the two signals to the operating mode selector unit (85) in response to a control signal.

13. Safety switching device according to any of claims 8 to 12, **characterized in that** the control device (80) comprises the operating mode selector unit (85).

14. Method for selecting an operating mode of a safety switching device (20) according to any of claims 1 to 13, with a safety transmitter (50) being connected to input terminals (41, 42), and with a defined input signal (E1) being supplied to the safety switching device (20), wherein the defined input signal (E1) is supplied to an operating mode selector unit (85) via one input including a further terminal (70), with the operating mode selector unit (85) identifying the defined input signal (E1) as one of at least three different defined input signals, and selecting one of at least three defined operating modes in response thereto, **characterized in that** the selection of the operating modes causes specific types of operation and/or specific of the parameters to be set, and wherein the at least three different input signals, comprise at least one clock signal from a clock generator means (60, 62) and at least one signal (75, 76) having a constant voltage.

15. Method according to claim 14, **characterized in that** the at least three different defined input signals (E1) are provided at at least one output (64, 66, 75, 76) of the safety switching device (20).

## Revendications

1. Commutateur de sécurité pour la mise en circuit et la mise hors circuit sécurisée d'une charge électrique en fonction d'un évènement de commutation d'un codeur de sécurité (50), comprenant des bornes d'entrée (41, 42) pour le raccordement du codeur de sécurité (50), comprenant au moins un élément de commutation (30) et comprenant au moins un dispositif de réglage du mode de fonctionnement (85) pour sélectionner un mode de fonctionnement en fonction d'un signal d'entrée (E1) défini, une entrée munie d'une borne d'entrée supplémentaire (70) étant présent, laquelle est reliée au dispositif de réglage du mode de fonctionnement (85) de sorte qu'il est possible d'acheminer le signal d'entrée (E1) au dispositif de réglage du mode de fonctionnement (85), le dispositif de réglage du mode de fonctionnement (85) étant configuré de telle sorte qu'il reconnaît le signal d'entrée (E1) défini comme étant un parmi au moins trois signaux d'entrée définis différents qui peuvent être acheminés à la borne d'entrée supplémentaire (70), et sélectionne en fonction de celui-ci un parmi au moins trois modes de fonctionnement définis, la sélection du mode de fonctionnement provoquant l'activation de certains types de fonction et/ou le réglage de certains paramètres de fonctionnement du commutateur de sécurité et les au moins trois signaux d'entrée définis différents contenant au moins un signal d'horloge de moyens générateurs d'horloge (60, 62) et au moins un signal (75, 76) ayant une tension constante.

2. Commutateur de sécurité selon la revendication 1, **caractérisé en ce qu'**il contient des moyens générateurs de signal internes (60, 62) qui délivrent les au moins trois signaux d'entrée (E1) définis différents sur au moins une sortie (64, 66, 75, 76).

3. Commutateur de sécurité selon la revendication 1 ou 2, **caractérisé en ce que** le dispositif de réglage du mode de fonctionnement (85) comprend des moyens de comparaison (87) pour comparer le signal d'entrée (El) avec au moins trois signaux de comparaison différents.

4. Commutateur de sécurité selon la revendication 3, **caractérisé par** des moyens générateurs d'horloge (60, 62) qui génèrent un signal d'horloge et qui délivrent celui-ci comme l'un des signaux de comparaison.

5. Commutateur de sécurité selon la revendication 4, **caractérisé en ce que** les moyens générateurs d'horloge (60, 62) génèrent deux signaux d'horloge différents et délivrent ceux-ci comme deux des au moins trois signaux de comparaison différents.

6. Commutateur de sécurité selon la revendication 4 ou 5, **caractérisé en ce qu'**il est prévu au moins une sortie (64, 66) qui est reliée aux moyens générateurs d'horloge (60, 62) et qui délivre un signal d'horloge.

7. Commutateur de sécurité selon l'une des revendication précédentes, **caractérisé en ce que** le signal d'entrée (E1) est un signal d'horloge des moyens générateurs d'horloge (60, 62), un signal constant avec un premier niveau de tension, de préférence la masse, ou un signal constant avec un deuxième niveau de tension, de préférence la tension de service.

8. Commutateur de sécurité selon l'une des revendications précédentes, **caractérisé en ce qu'**il existe un dispositif de commande (80) qui est relié au dispositif de réglage du mode de fonctionnement (85) et qui règle le mode de fonctionnement sélectionné en fonction d'au moins un signal de sortie (A1-A4) du dispositif de réglage du mode de fonctionnement (85).

9. Commutateur de sécurité selon la revendication 8, **caractérisé en ce que** le dispositif de commande (80) génère un signal d'entrée (P) pour un commutateur de sécurité (20) disposé à la suite et le délivre sur une sortie (77).

10. Commutateur de sécurité selon la revendication 9, **caractérisé en ce que** le signal d'entrée pour le commutateur de sécurité disposé à la suite (P) est un signal d'horloge des moyens générateurs d'horloge, un signal constant avec un premier niveau de tension, de préférence la masse, ou un signal constant avec un deuxième niveau de tension, de préférence la tension de service.

11. Commutateur de sécurité selon l'une des revendications précédentes, **caractérisé en ce qu'**il est prévu une entrée (43) pour appliquer un signal de démarrage (S3) afin de sélectionner un parmi plusieurs modes de fonctionnement de démarrage.

12. Commutateur de sécurité selon la revendication 11, **caractérisé en ce que** sont prévus des moyens de sélection (89) auxquels sont acheminés le signal d'entrée (E1) et le signal de démarrage (S3) et qui achemine l'un des deux signaux au dispositif de réglage du mode de fonctionnement (85) en fonction d'un signal de commande.

13. Commutateur de sécurité selon l'une des revendications 8 à 12, **caractérisé en ce que** le dispositif de commande (80) comprend le dispositif de réglage du mode de fonctionnement (85).

14. Procédé de réglage d'un mode de fonctionnement d'un commutateur de sécurité (20) selon l'une des revendication 1 à 13, un codeur de sécurité (50) étant raccordé à des bornes d'entrée (41, 42) et un signal d'entrée (E1) défini étant acheminé au commutateur de sécurité (20), le signal d'entrée (E1) défini étant acheminé à un dispositif de réglage du mode de fonctionnement (85) par le biais d'une entrée munie d'une borne supplémentaire (70), le dispositif de réglage du mode de fonctionnement (85) reconnaissant le signal d'entrée (E1) défini comme étant un parmi au moins trois signaux d'entrée définis différents et sélectionnant, en fonction de celui-ci, un parmi au moins trois modes de fonctionnement définis, **caractérisé en ce que** la sélection du mode de fonctionnement provoque l'activation de certains types de fonction et/ou le réglage de certains paramètres de fonctionnement du commutateur de sécurité et les au moins trois signaux d'entrée définis différents contenant au moins un signal d'horloge de moyens générateurs d'horloge (60, 62) et au moins un signal (75, 76) ayant une tension constante.

15. Procédé selon la revendication 14, **caractérisé en ce que** les au moins trois signaux d'entrée (E1) définis différents sont délivres sur au moins une sortie (64, 66, 75, 76) du commutateur de sécurité (20).
